# EUROPEAN PATENT APPLICATION

(11) **EP 1 355 496 A2**
(43) Date of publication of application: **22.10.2003**
(21) Application number: 03004273.3
(22) Date of filing: 26.02.2003
(51) Int. Cl.: H04N 7/16

(54) **Distributed tuner allocation and conflict resolution**

(30) Priority: 18.04.2002 US 125677
(71) Applicant: MICROSOFT CORPORATION, Redmond, Washington 98052-6399 (US)
(72) Inventor: Cheng, David J., Cupertino, California 95014 (US); Young, Mark G., Cupertino, California 95014 (US); Watkins, Douglas, Mountain View, California 94040 (US)
(74) Representative: Grünecker, Kinkeldey, Stockmair & Schwanhäusser Anwaltssozietät

(57) **Abstract**

Systems, methods and computer program products for allocating tuner resources to tuner consumers when a tuner conflict occurs. When the tuner resources of a system or network reside at a central server, the tuners are allocated to requesting consumers according to the priority of the tuner request and the current tuner priorities. A tuner request that has a higher priority than one of the current tuners is granted. The tuner is not taken from the consumer without warning, however. Tuner conflict is also prevented by lowering the respective tuner priorities as appropriate.

## Description

### BACKGROUND OF THE INVENTION

### The Field of the Invention

The present invention relates to allocating tuner resources in a distributed system. The present invention further relates to systems, methods, and computer program products for allocating tuner resources in a distributed system where the tuner resources are distributed across the distributed system and more particularly to allocating tuner resources where the tuner resources reside on a central server.

### Background and Relevant Art

One of the advantages of systems, such as satellite and cable television systems, that deliver audio/video (AV) content is the ability to deliver an increasing number of channels and choices to users. Together, digital satellite systems and cable television systems offer hundreds of television channels from which a user may select. In addition to delivering AV content, these systems also deliver other types of content or data that can be stored on a computer or other processing device.

In order to receive the various types of content, however, the user may be required to tune to an appropriate channel. In fact, much of the content received through satellite and cable systems requires a tuner. Tuners, therefore, are an important resource as they play an integral role in retrieving content from various sources. Viewing live television, for example, requires a tuner. If the user desires to have picture in picture (PIP) capabilities, a second tuner is typically required for the PIP window. Recording a television program is another function that requires a tuner. Other functions, such as retrieving content such as guide data or receiving a software update, may also require a tuner.

The ability of a user to perform concurrent actions is often limited by the number of tuners that are available to the user. A system that only has one tuner can only tune one program or channel at a time, even though the user may be able to view previously recorded programs. If a system with only one tuner is recording a program, then that tuner cannot be used for another purpose, unless the user terminates the recording. A system with two tuners provides more flexibility to users. In this case, a user can use the first tuner to record one program while using the second tuner to view another program. Alternatively, the user can concurrently record two programs.

In some systems, the content is received at a gateway or central server and then distributed to various nodes. Because the tuners are often located at the gateway or central server and because the number of tuners is limited, there is a potential for tuner conflict because tuners are heavily used to retrieve content. Tuner conflict or contention among the consumers that require tuners is inevitable.

From a user's perspective, the following scenarios describe some of the potential conflicts that may arise with respect to tuner usage. In one scenario, a user may desire to either watch a television program or record a television program and there is no tuner available. In this situation, the user will not be able to either watch television or record a television program unless the conflict can be resolved. In another scenario, the user is watching television and either another user or the system requests a tuner. It is undesirable to interrupt the user watching television in order to provide a tuner to the requesting consumer. Thus, there is a need to resolve this conflict.

Alternatively, the user desires to watch television, but all tuners are being used to tune television channels. However, the system cannot determine whether someone is actually watching the channels being tuned by those tuners. In this case, a tuner may be available, but it is difficult to ascertain. Other scenarios with tuner conflict may occur, but the limiting factor of these systems is that the number of tuner consumers typically outnumbers the tuners that are available in the distributed system. Because these systems rely heavily on the tuner resources, they are a scarce resource and tuner conflict needs to be predictably resolved.

### SUMMARY OF THE INVENTION

The present invention recognizes the limitations of the prior art and the need for systems, methods, and computer program products for allocating tuner resources. In a network or system where content from a source is received through a central server and where tuners primarily reside on the central server, the tuners can become a scarce resource and conflict can arise with respect to tuner usage because the number of consumers that require a tuner typically outnumber the tuners that are available on the central server or in the distributed system. The present invention also applies to those situations where the tuners are not all located at the central server, but are distributed throughout the system or network.

The system or the central server can only guarantee that a certain number of video streams (equal to the number of tuners) can be used simultaneously. Because of the potential tuner conflict, the central server manages the conflict and allocates tuners to consumers with a tuner arbiter that enforces tuner rules and tuner priorities. When a tuner request is received and a tuner conflict occurs, the tuner arbiter predictably resolves the tuner conflict according to these rules and priorities.

In accordance with the present invention, the following rules and priorities apply. Each live television event requires a tuner even when two users are watching the same program through different set top boxes. Similarly, each record event also requires a single tuner.

Pause buffers, typically used to temporarily record a live television event, are not shared among users. If a pause buffer were shared, then the ability of one user to watch television when the other user changes channels may be interrupted. Record buffers, used to record a video stream, are shared in limited circumstances that do not present a potential tuner conflict.

When a tuner is requested by a consumer and a tuner is available, the tuner is allocated to the requesting consumer. If there is a conflict, then the conflict is resolved by the tuner arbiter of the distributed system or of the central server. Each tuner has a particular priority that is determined in part by how the tuner is being used. A tuner that is recording a program, for example, has high priority, while an idle tuner has low priority. The resolution of the tuner conflict depends on the relative priorities of the tuners and on the tuner priority associated with the tuner request. In some instances, a consumer may lose a tuner based on the relative priorities.

In addition to allocating tuners based on rules and/or priorities, the present invention resolves conflict by presenting a user with options or choices. When a tuner is unavailable and cannot be allocated based on priority, the user is given the option of altering a current tuner usage. For example, a scheduled event that is currently being recorded may be rescheduled such that the tuner is made available for the requesting user. Other options may also be presented to the user that will free a tuner.

The present invention also attempts to prevent tuner conflict before it occurs. This is performed by actively monitoring tuner priorities and by lowering their priorities when possible. For example, the priority of a tuner used to record a video stream is lowered when the recording is finished. Preventing tuner conflict is thus another aspect of the present invention and is a part of allocating tuner resources to consumers.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Figure 1 illustrates an exemplary environment for implementing the systems, methods, and computer program products of the present invention;

Figure 2 illustrates a central server that has limited tuner resources and also illustrates the consumers that vie for those resources;

Figure 3 is a block diagram that illustrates a pause buffer and a record buffer that may be associated with a tuner;

Figure 4 illustrates an exemplary tuner priority list;

Figure 5 illustrates a tuner arbiter of a central server that is responsible for allocating the tuners of the central server to the consumers according to rules and tuner priorities;

Figure 6 is a flow diagram illustrating a method for resolving tuner conflict when no tuner is available for the requesting user;

Figure 7 is another exemplary illustration of a method for resoling tuner conflict; and

Figure 8 illustrates an exemplary system that provides a suitable operating environment for the present invention.

### DETAILED DESCRIPTION OF THE PREFERRED EMBODIMENTS

The present invention relates to allocating tuner resources in a distributed system or network. In these systems or networks, the number of consumers that use or require tuner resources typically outnumbers the tuners that are available for allocation, especially when the tuners reside on a central server or set top box. The present invention allocates tuners to the consumers and resolves conflicts that arise with respect to tuner usage and tuner requests. These tuners are allocated predictably, thus ensuring that a consumer does not lose control of a tuner without forewarning or without being asked to relinquish their tuner. The present invention is scalable and can be adapted to any number of tuners that reside in the system or network.

One of the advantages of the present invention is that when a user has control of a tuner, the tuner will not be taken from the user without forewarning the user or asking the user for the tuner. The present invention also encourages scheduled recordings to occur, for example, by being rescheduled in some instances or by informing the user that the tuner will be unavailable when the tuner is required to record a program . The present invention also attempts to prevent tuner conflict by attempting to determine if a tuner is actually being used by a consumer. Finally, a user cannot force another user to relinquish their tuner.

In the following description, the following terms will apply. A consumer refers to entities that use tuner resources and includes, but is not limited to, users, set top boxes, a scheduler, and the like. A tuner or a tuner resource is used to retrieve or receive content or data from a sources, which include, but are not limited to, a satellite system, a specific satellite transponder, or a cable system. A pause buffer is used to temporarily store a current event such as a television program. The pause buffer is used for an event that is not being recorded and a tuner associated with a pause buffer is controlled by a user. A record buffer is a buffer for a currently recording event and a tuner associated with a record buffer is controlled by a scheduler. When a user desires to watch a recorded program, no tuner is required. A television window can be a full screen window, a medium screen window, a picture in picture (PIP) window, and the like. A scheduler is a component that maintains and manages events including record events.

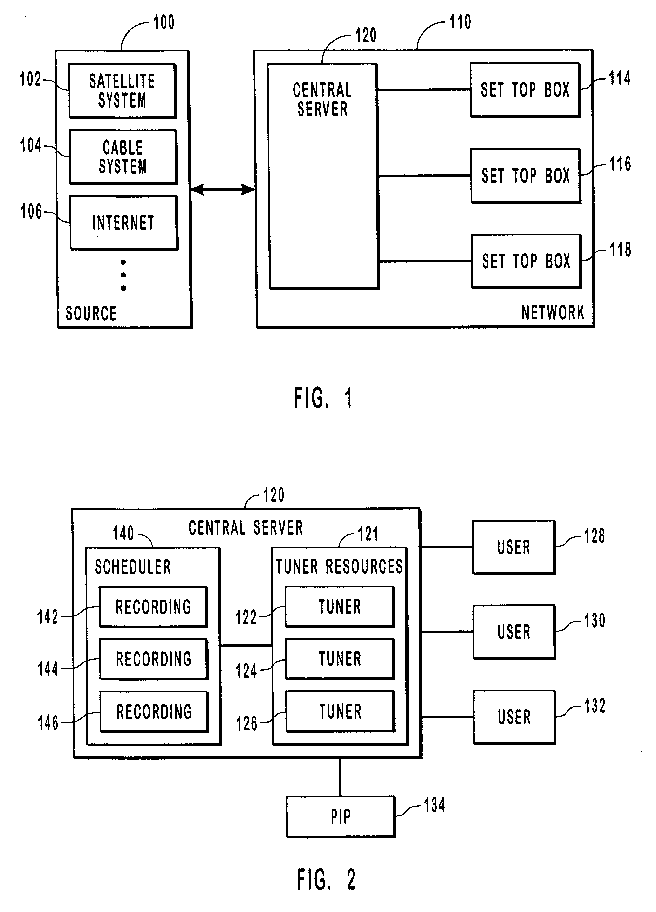

Figure 1 illustrates an exemplary environment for implementing the present invention. Figure 1 illustrates a source 100 that is connected with a network 110. Exemplary sources include, but are not limited to, a satellite system 102, a cable system 104 and the Internet 106. The content or data that is available from the source 100 includes, but is not limited to, audio/video data, video streams, text, guide data, services, software updates, advertisements, image data, other data and the like or any combination thereof.

The network 110 illustrated in Figure 1 includes, for example, a central server 120 and one or more node set top boxes 114, 116, and 118. The central server 120 often functions as a gateway between the network 110 and the source 100. Thus, content or data intended for any particular node set top box or for the central server typically passes through the central server 120. In some instances, however, a node set top box may access the source 100 directly. For example, the set top box 114 may have a separate connection with the Internet 106.

A set top box is an exemplary computing environment that is able to receive, send and process content. Exemplary set top boxes include, but are not limited to, digital video recorders (DVRs), satellite receivers, Internet terminals, cable boxes, digital satellite systems (DSS), a computer, and the like and any combination thereof. The central server 120, for example, may also function as a server computer for the network 110. Much of the content or data that is delivered to the node set top boxes 114, 116, and 118 is distributed and delivered by the central server 120.

Figure 2, for example, illustrates some exemplary resources of a central server that are allocated or distributed to the potential consumers or users of those resources. In particular, the central server 120 illustrated in Figure 2 includes tuner resources shown as: tuner 122, tuner 124, and tuner 126. It is understood that the central server 120 may include any number of tuners. These tuners are consolidated at the central server 120 and can be used by any of the node set top boxes illustrated in Figure 1. When a tuner is used by either a node set top box or the central server, the tuner is distributed or allocated to that set top box. This, of course, does not preclude one of the node set top boxes from having their own tuner. In this example, however, the tuner resources of the network 100 (of Figure 1) reside on the central server 120. The present invention can also be applied to those networks where the tuners are located at various set top box boxes across the network 100 in addition to the central server 120.

Figure 2 also illustrates exemplary consumers of the resources of the central server: user 128, user 130, user 132, PIP 134, and a scheduler 140. The users 128, 130, and 132 are users that are using a node set top box for some function that requires a tuner resource. The PIP 134 is a separate window that is displayed to one of the users and also requires a tuner resource. The scheduler 140 is a component that schedules and manages events for the network. In this example, the scheduler 140 is able to record tuned scheduled events. Because this example illustrates three tuners, the scheduler 140 can control three concurrent recording events, illustrated as recording 142, recording 144, and recording 146.

Figure 2 illustrates that the number of potential consumers is greater that the number of tuners at the central server 120. As previously stated, the tuner resources of the central server 120 are used for a wide number of different purposes that include, but are not limited to, retrieving audio/video data for a television program, receiving services from a source (such as movie data, stock quotes, sport scores, etc.), retrieving software updates from a source, receiving advertisements that are displayed to the users (this is often performed at night when the tuners are likely not in use by the users), aligning a dish, and receiving guide data that describes, for example, television programming that can be accessed from the source 100 through the network 110. Some of the functions for which a tuner are required are deferrable events. For example, receiving a software update or receiving new guide data can be deferred in some instances.

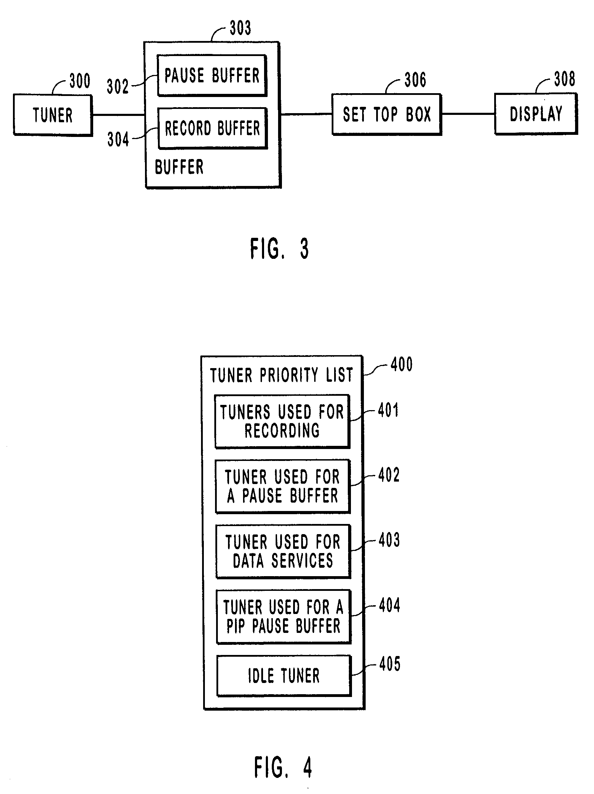

Figure 3 illustrates some of exemplary uses or functions of a tuner resource and illustrates the difference between a pause buffer and a record buffer. When a user at a set top box 306 is, for example, watching a live or current television program, the video will be displayed on the display device 308. For a current television program a tuner is required and in this example, the tuner 300 is tuned to the channel and program selected by the user. If the user is recording the program, then a record buffer 304 is used to record the program. During the recording, the tuner 300 is controlled by the scheduler 140 of Figure 2. The recording is stored on either the central server or on a node set top box. If the user is not recording the program, then a pause buffer 302 is used to record the program as well. The pause buffer is temporary and a new pause buffer begins, for example, each time the user changes channels. When the tuner 300 is using a pause buffer 302, the tuner 300 is controlled by the user.

Figure 4 illustrates an exemplary tuner priority list 400. The priority list 400 is used to determine a priority level of a particular tuner. The priority list 400 can also be used to identify a priority level associated with a tuner request. The priority list 400 is thus used in allocating a tuner. Tuners with a low priority, for example, may be allocated to tuner requests that are associated with a higher priority. Tuners that are used for recording (401) have the highest priority. The next level of priority is assigned to a tuner that is writing to or associated with a pause buffer (402). In other words, tuners used for watching live television have this level of priority because a pause buffer is being used. In one example, a tuner used for a pause buffer at the central server has a higher priority that a tuner writing to a pause buffer for a node set top box. Alternatively, if more than one pause buffer is present, then the tuner associated with the most recent user input has higher priority.

Tuners used for data services (403) have the next priority. Data services typically provide a specific type of data to a user and a tuner is required to access and retrieve the data. For example, a movie service may provide movie related data to a user. Other data services include, but are not limited to, software updates, user profile data, and the like. Some of the data services provide real time data and these services may have a higher priority than other data services. There is no distinction between data service occurring on a node set top box and data services occurring on the central server. As previously mentioned, many data services are deferrable events. However, some events are non-deferrable and take priority even over higher priority events. When a feed is removed from the set top box, for example, a tuner will be taken away by the central server.

The next level of priority is when a tuner is writing to a pause buffer for a PIP window. In this case, the user has control of two tuners: one for the regular window and one for the PIP window. If a tuner is required for another use, the PIP tuner, because of its relatively low priority in the priority list 400, will be taken. The lowest priority is assigned to an idle tuner (405). Clearly, an idle tuner is available for any request, at which time it will receive a higher priority based on the usage of the tuner.

When a tuner is requested by a consumer and/or allocated to a consumer, the priority levels of the tuners are determined. The lowest priority tuner is a candidate to be reallocated to the requesting consumer. The tuner, however, is not always reallocated because the priority level of the consumer request and the identity of the requesting consumer (user or system, for example) are also considered.

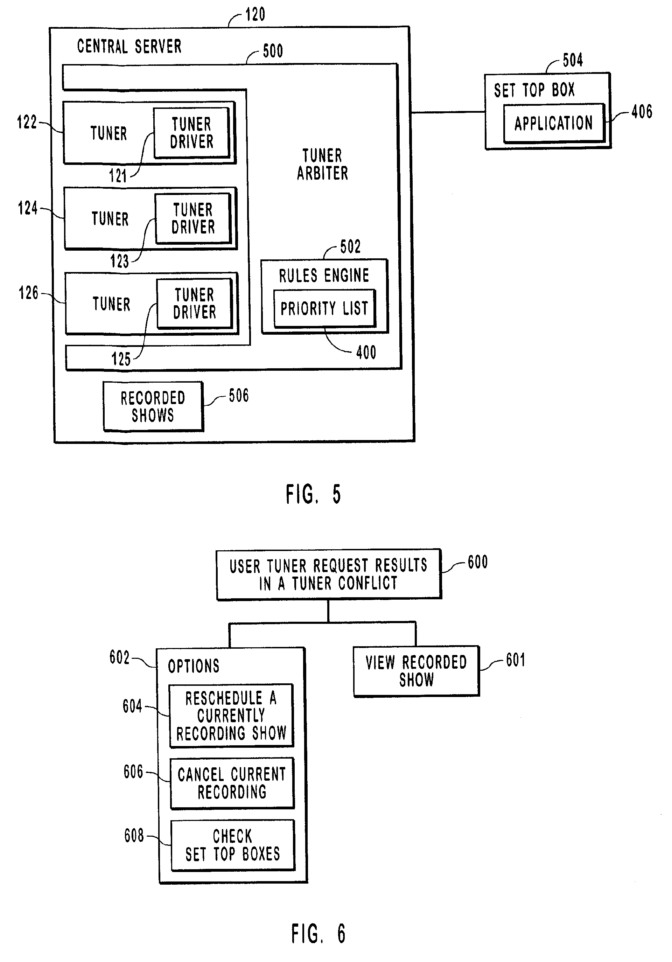

Figure 5 is a block diagram illustrating a tuner arbiter that allocates or distributes the tuner resources to the various consumers that may require a tuner resource. The tuner arbiter 500 is responsible for utilizing the rules engine 502 to allocate the tuners 122, 124, and 126 to the various consumers. The rules engine 502 implements rules that enable the tuner arbiter 500 to resolve conflicts over the tuner resources. The rules engine 502 also takes the tuner priority list 400 into account when resolving tuner conflicts.

Each tuner of the central server 120 has an associated tuner driver. One of skill in the art would recognize that other driver implementations are possible. In this embodiment, the tuner driver 121 controls the tuner 122, the tuner driver 123 controls the tuner 124, and the tuner driver 125 controls the tuner 126 in this example. Each tuner driver typically maintains information including, but not limited to, tuner state (idle, in use, to pause buffer, to record buffer, etc.), channel, recorded by scheduler, and the like. The tuner information can be used to determine the priority level of a tuner, for example, or determine a current tuner usage. The tuner arbiter 500, for example, can determine whether a tuner is being used for recording a program, watching television, receiving data services, or other function. The particular activity of the tuner thus has an impact on other tuner requests from other consumers. Typically, a tuner will not be taken if it has a higher priority than the priority of the tuner request. A tuner used to record a program, for example, is not taken to allow a user to watch live television.

The rules engine 502 is also based in part upon the following principles or rules and each principle or rule is illustrated with respect to Figure 1 and Figure 4. Resolving tuner requests and allocating tuner resources are performed using the rules discussed below and/or the tuner priorities previously discussed. For each situation discussed below, the tuners have a corresponding priority level as previously described. When a tuner request is received, the system or the central server determines if the tuner request causes a tuner conflict such that a tuner cannot be allocated. If a tuner conflict is determined, then the rules described below are used in resolving the tuner conflict.

Each live television event or program requires a single tuner. For example, a user is watching a program on the set top box 114 and another user is watching the same program on the set to box 116. Each user is using a separate tuner allocated by the tuner arbiter 500 of the central server 120. This example also assumes that the programs being watched are not previously recorded programs because viewing a previously recorded program does not require a tuner resource. If the tuners are being used for a live television event, then the tuners are writing to a pause buffer and have a corresponding priority level.

Each record event also requires a single tuner. For example, a user schedules a program to be recorded by a set top box 114. If the program is being recorded and if the user desires to watch that program, then an additional tuner is required. In other words, if the user is watching the program on the set top box 114, then two of the tuners from the central server are being used. The tuner used to record the program is controlled by the scheduler and the other tuner used to watch live television is controlled by the user. A tuner used for a record event also has a priority level as previously described.

Record buffers are typically not shared. One exception to this case is when a user tunes to a channel and begins recording that channel. When the user begins to record the channel, then control of the tuner passes from the user to the scheduler. As long as the user continues to view the channel being recorded, the same tuner will be used. If the user desires to change channels, however, a second tuner will be required as the scheduler is controlling the tuner that is used for the recording in this example and because a recording event has a higher priority that a tuner used to watch live television. If another tuner is not available, then the conflict is resolved by the tuner arbiter with reference to the rules engine 502 and the priority list 400.

If a user is viewing a program that is being recorded and the user changes channels and then desires to change back to the channel or program that is recording, the user will be able to use the record buffer in this case. If the channel or program is no longer recording, then the user will not use the record buffer, but will use a pause buffer. The user will also have control of the tuner, which was relinquished by the scheduler when the recording finished. If a user on another set top box desires to watch the channel or program being recorded by the first user, that user will not be able to use the record buffer, but will require their own tuner.

Pause buffers are not shared between users. Two users that tune to the same channel or program on different set top boxes will not share the same pause buffer. One reason for not sharing the pause buffer is related to predictability and control of the tuner. For example, assume that the central server 120 detects that two users on the set top boxes 114 and 116 are viewing the same program. The central server 120 thus decides to have the users share a tuner and a corresponding pause buffer. The relinquished tuner is reallocated to another consumer and the remaining tuner resources of the central server 120 are in use. When the user who is sharing a pause buffer with another user decides to change to another program, a need for an additional tuner is created in order to ensure that the program of both users remains uninterrupted. Because none of the other tuners are currently idle, one of the users will be unable to continue viewing their program. Conflict that occurs as a result of an action by an unknown user is undesirable and should be avoided. For this reason, pause buffers are not shared.

A recording cannot be stopped or deleted if another user is viewing the recording. However, the recording can be stopped and/or deleted if only one user is watching the recording as it is being recorded.

When a conflict is detected by the tuner arbiter in response to a consumer tuner request or other event, a broadcast message is sent to the node set top boxes unless the conflict can be resolved without sending a broadcast message. The broadcast message will disappear as soon as a user responds in a manner that frees a tuner. For example, the broadcast message may cause a user to terminate a recording such that the tuner is freed for use by the requesting consumer. If no user responds to the broadcast message, then the system may take the tuner with the lowest priority. These rules and the tuner priority list are used by the rules engine 502 or the tuner arbiter 500 to resolve tuner conflicts.

When a user loses their tuner due to conflict resolution or for other reasons, the user will typically remain in the same application. For instance, if a user is viewing guide data when the tuner is taken away from the user, the user will remain in the guide data application and a message will appear indicating that no tuners are currently available.

Usually, a tuner is only taken away from an existing user when the tuner request has a higher priority than the current tuner usage. However, there are instances when a tuner may be reallocated. For example, when a user fails to respond to a broadcast message or when the current tuner usage of a user is for a PIP window, then the tuner may be reallocated to the requesting user. In the case where a tuner is used for a PIP window and the current user desires to capture the pause buffer for a record buffer, then reallocating this tuner may cause the recording to be prematurely terminated. To promote consistency, tuners are typically only reallocated when a user fails to respond to a broadcast message. This approach ensures that the adversely affected user is the user that is not actually using the tuner and that the user from whom the tuner is taken has simply failed to relinquish the tuner.

Another aspect of determining tuner priority is by preventing or resolving tuner conflict without interrupting or querying any of the users. The present invention therefore attempts to resolve tuner conflicts before they occur by altering tuner priorities in certain circumstances.

Determining or detecting whether a user still requires a tuner can be difficult. For example, if a user that is watching a television program through a node set top box simply leaves without turning off the set top box, then neither the node set top box nor the central server is aware that the tuner is available. From the perspective of the tuner arbiter or central server, the tuner is still being used by the user even though the user is no longer present.

Determining whether a consumer or a user is still using a tuner can be accomplished by establishing an idle time. If the set top box has not experienced any user input (no channel changes, etc.) within the idle time, then the state of the tuner can be automatically set to an idle state. The idle time can be user defined. The set top box can also broadcast a message when the idle time expires to validate that the tuner is not being used. This broadcast message can be specific to the set top box that is using the tuner resource at issue.

Using the tuner drivers which store the state of the tuners, the tuner arbiter 500 can make a better decision regarding tuner priority. The tuner can be placed in an idle state or relinquished, for example, in the following situations. When a tuner is finished recording, the tuner is placed in an idle state, which has the lowest priority. When a user decides to watch a recorded program, which does not require a tuner, the tuner(s) that the user was using are also placed in an idle state. When the set top box is turned off, the tuner is relinquished and placed in an idle state. Tuners with an idle state are available for use by a consumer. Reducing the priority of a tuner in these and other situations reduces the likelihood of future conflict.

In a situation where a user is not watching a live television program but is in an application for which a tuner may be required, such as a guide data application, the set top box is capable of entering a screen saver mode. The set top box is typically not capable of the screen saver mode when live television is being displayed. When the set top box enters a screen saver mode, the tuner is relinquished and placed in an idle state if the screen saver mode is not interrupted for a certain time period because it is reasonable to assume that the tuner is not being actively used in the absence of user input. User input, on the other hand, indicates that the user is actively involved in the application and is using the tuner. In these types of situations, the tuner states are set as idle states, which have low priority and are available for consumer tuner requests.

When a tuner is available, the tuner may be freely allocated to a requesting consumer. Figure 6 illustrates an exemplary method for allocating tuner resources when no tuner is available for a user, which indicates that all tuners are being used for some functionality. Tuner allocation is related to the priority of the tuner usage and conflicts are resolved based in part on the tuner priorities. Tuner unavailability implies that the tuners in use have the same or higher priority than the tuner request. For example, a user request to watch live television will not take a tuner away from another user that is watching live television. However, a tuner request for live television may take a tuner away from a deferrable event or from a tuner usage that has lower priority.

In this instance, a tuner is not available. When a user begins to use a set top box for a purpose that requires a tuner, such as viewing television, the user is informed that no tuner is currently available (600). The user is presented with a choice to view a recorded program or show (601) or to select other options 602 that may permit the user to obtain a tuner. If the user elects to view a recorded program, no tuner is required and the conflict is resolved.

If the user selects options 602, the user is first presented with the option to reschedule a currently recording program (604). This option is typically provided if the central server can reschedule to program. In this example, the set top box may search the guide data to determine if the show is shown at another date and time. If the set top box determines, for example, that the program cannot be rescheduled, then the user is presented with the option of canceling the current recording (606). The user's ability to cancel the recording, however, is subject to the rules described previously.

If these options do not free a tuner or if these options cannot be accomplished, then the user may be presented with the option of actually checking the other set top boxes (608) to determine if a user is actually using the tuners. This is often accomplished by broadcasting a message on the other set top boxes. While checking the other set top boxes, the central server can determine tuner usage based on the tuner state. If the tuner is associated with a record buffer, then the program is being recorded and the tuner has high priority. If the tuner is associated with a pause buffer, then the user, if present, is watching television.

Broadcasting a message thus determines if the user is actually watching television, an action that cannot be determined from the tuner state. The broadcasted message to the other set top boxes asks if the user is watching television or otherwise using a tuner. The actual message broadcasted to the users is not in the form of "Are you using a tuner?" because the user may not understand the question. Instead, the user is asked, for example, whether they are watching television, which implicitly requires a tuner. Thus, no response to the broadcast message suggests that the user is not present and is not using the tuner even though the tuner may be tuning and writing to a pause buffer. In this situation, control of that tuner that did not receive a user response is given to the user that is requesting the tuner and the conflict is resolved. If no tuners are available, the user is typically advised that no tuner is available. The user may also be advised that the user will be notified when a tuner becomes available.

Another type of tuner conflict arises when the system requests or requires a tuner. The first example occurs when the scheduler requires a tuner in order to record a scheduled program. A recording tuner has high priority. In this case, the system indicates to the user that their tuner will be unavailable during the scheduled recording and that their current tuner usage will terminate when the scheduler requires the tuner.

The system also provides the user, however, with some options in this scenario. The user has the ability to either record the program as scheduled, or to reschedule the recording. If reschedule is selected, then the scheduler will no longer require the tuner to record a program, the conflict is removed and the user can continue using the tuner knowing that they will not lose their tuner to the scheduler. If rescheduling the program is not possible, the user is given the option of canceling the recording. If the user decides to cancel the recording, then the tuner remains available and control of the tuner will not be relinquished to the scheduler. If the user does not cancel or reschedule the recording, then the user may lose the tuner to the scheduler and the scheduler will record the program with the tuner the user is currently controlling (unless another tuner becomes available in the interim).

Alternatively, the system broadcasts a message to determine if the tuners (or televisions) are in use. If a yes response is received from some users, then those tuners remain unavailable. If no response is received from one of the tuner uses, then that tuner is allocated to the requesting consumer. In some instances, the system will require a tuner immediately and will take the lowest priority tuner. For example, when a satellite feed is removed from the back of the box, a tuner is unavailable and will be taken.

Another situation is where the system wants a tuner for a deferrable event. If no tuners are currently available, the system will wait until a tuner becomes available. This ensures that users are not interrupted. In a situation where a user requests a tuner being used for a system deferrable event, the system is preempted and the tuner is allocated to the user. However, the priority of the user request is typically higher than a deferrable event. For example, assume that two tuners are being used for recording and one tuner is being used for a system deferrable event. When a user turns on a television to watch television, the system deferrable event is interrupted and the tuner is allocated to the user to watch television. A system deferrable event usually has lower priority than a tuner used to watch television.

Another factor that can be incorporated into determining tuner priority and to allocating tuners is by assigning priorities to various set top boxes of televisions within the network. In a home, for example, the set top box that is primarily used may have the highest priority, while the parent's set top box may have the next highest priority. This can be used, for example, to determine which set top boxes receive a broadcast message or to determine which tuner is taken by default when no users respond to the broadcast messages.

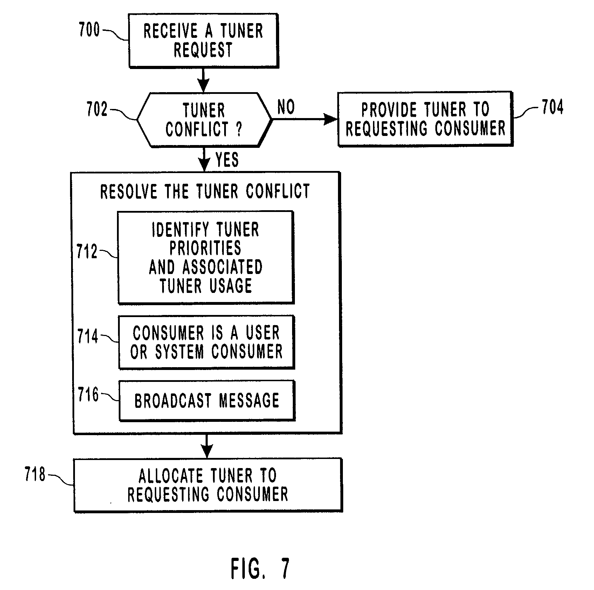

Figure 7 is another example of resolving tuner conflict. At 700, a tuner request is received at a central server. At 702, the central server or the tuner arbiter determines whether a tuner conflict exists. If no conflict is present, a tuner is allocated to the requesting consumer (704). If a conflict is present, the conflict is resolved at 710.

Resolving a tuner conflict requires the tuner arbiter to identify the current tuner priorities and the associated tuner usages. This information alone is often sufficient to resolve the conflict. For example, a request to watch live television has priority over a tuner used for a PIP window. In this case, the tuner used for the PIP window is allocated to the requesting consumer. If the tuner conflict cannot be resolved using the tuner priorities, then a message is broadcast (716) as previously described. If the conflict is resolved successfully for the requesting consumer, a tuner is allocated to the requesting consumer (718). Otherwise, the requesting consumer must wait until a tuner becomes available.

The present invention extends to both methods and systems for allocating tuner resources in a distributed system. The embodiments of the present invention may comprise a special-purpose or general-purpose computer including various computer hardware, as discussed in greater detail below. The set top boxes described herein are examples of special-purpose computers.

Embodiments within the scope of the present invention also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

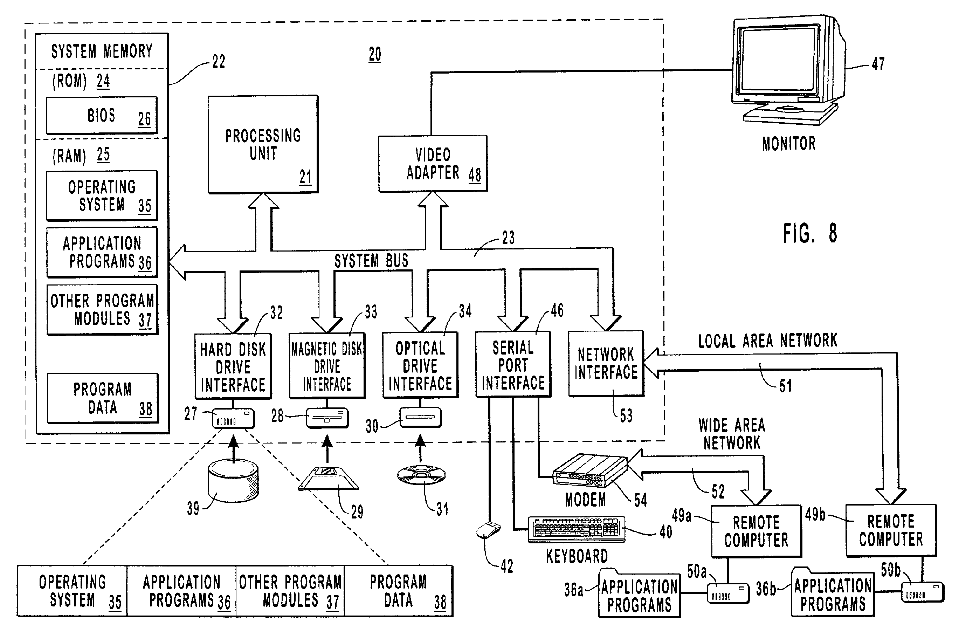

Figure 8 and the following discussion are intended to provide a brief, general description of a suitable computing environment in which the invention may be implemented. Although not required, the invention will be described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those skilled in the art will appreciate that the invention may be practiced in network computing environments with many types of computer system configurations, including personal computers, hand-held devices, multi-processor systems, microprocessor-based or programmable consumer electronics, network PCs, minicomputers, mainframe computers, and the like. The invention may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

With reference to Figure 8, an exemplary system for implementing the invention includes a general purpose computing device in the form of a conventional computer 20, including a processing unit 21, a system memory 22, and a system bus 23 that couples various system components including the system memory 22 to the processing unit 21. The system bus 23 may be any of several types of bus structures including a memory bus or memory controller, a peripheral bus, and a local bus using any of a variety of bus architectures. The system memory includes read only memory (ROM) 24 and random access memory (RAM) 25. A basic input/output system (BIOS) 26, containing the basic routines that help transfer information between elements within the computer 20, such as during start-up, may be stored in ROM 24.

The computer 20 may also include a magnetic hard disk drive 27 for reading from and writing to a magnetic hard disk 39, a magnetic disk drive 28 for reading from or writing to a removable magnetic disk 29, and an optical disk drive 30 for reading from or writing to removable optical disk 31 such as a CD-ROM or other optical media. The magnetic hard disk drive 27, magnetic disk drive 28, and optical disk drive 30 are connected to the system bus 23 by a hard disk drive interface 32, a magnetic disk drive-interface 33, and an optical drive interface 34, respectively. The drives and their associated computer-readable media provide nonvolatile storage of computer-executable instructions, data structures, program modules and other data for the computer 20. Although the exemplary environment described herein employs a magnetic hard disk 39, a removable magnetic disk 29 and a removable optical disk 31, other types of computer readable media for storing data can be used, including magnetic cassettes, flash memory cards, digital versatile disks, Bernoulli cartridges, RAMs, ROMs, and the like.

Program code means comprising one or more program modules may be stored on the hard disk 39, magnetic disk 29, optical disk 31, ROM 24 or RAM 25, including an operating system 35, one or more application programs 36, other program modules 37, and program data 38. A user may enter commands and information into the computer 20 through keyboard 40, pointing device 42, or other input devices (not shown), such as a microphone, joy stick, game pad, satellite dish, scanner, or the like. These and other input devices are often connected to the processing unit 21 through a serial port interface 46 coupled to system bus 23. Alternatively, the input devices may be connected by other interfaces, such as a parallel port, a game port or a universal serial bus (USB). A monitor 47 or another display device is also connected to system bus 23 via an interface, such as video adapter 48. In addition to the monitor, personal computers typically include other peripheral output devices (not shown), such as speakers and printers.

The computer 20 may operate in a networked environment using logical connections to one or more remote computers, such as remote computers 49a and 49b. Remote computers 49a and 49b may each be another personal computer, a server, a router, a network PC, a peer device or other common network node, and typically include many or all of the elements described above relative to the computer 20, although only memory storage devices 50a and 50b and their associated application programs 36a and 36b have been illustrated in Figure 8. The logical connections depicted in Figure 8 include a local area network (LAN) 51 and a wide area network (WAN) 52 that are presented here by way of example and not limitation. Such networking environments are commonplace in office-wide or enterprise-wide computer networks, intranets and the Internet.

When used in a LAN networking environment, the computer 20 is connected to the local network 51 through a network interface or adapter 53. When used in a WAN networking environment, the computer 20 may include a modem 54, a wireless link, or other means for establishing communications over the wide area network 52, such as the Internet. The modem 54, which may be internal or external, is connected to the system bus 23 via the serial port interface 46. In a networked environment, program modules depicted relative to the computer 20, or portions thereof, may be stored in the remote memory storage device. It will be appreciated that the network connections shown are exemplary and other means of establishing communications over wide area network 52 may be used.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. In a network where consumers that include one or more set top boxes use tuners located at a central server, wherein the tuners are required to deliver content from a source to the consumers in the network, a method for allocating a tuner to a consumer, the method comprising:
receiving a tuner request at the central server from a consumer, wherein the tuner request is associated with a tuner priority;
determining if the tuner request causes a tuner conflict such that a tuner cannot be allocated to the requesting consumer, wherein the tuner request is granted if there is not a tuner conflict; and
resolving the tuner request by providing the consumer with a particular tuner that has a priority that is less than the tuner priority associated with the tuner request, wherein the particular tuner is not allocated to the consumer if the priority of the particular tuner is equal or greater than the tuner priority associated with the tuner request.

2. A method as defined in claim 1, wherein receiving a tuner request at the central server further comprises at least one of:
receiving a tuner request to record a program or for a record buffer;
receiving a tuner request to watch a live program or for a pause buffer, wherein a tuner request to record a program has higher priority than a tuner used to watch a live program;
receiving a tuner request to use data services, wherein a tuner request to watch a live program has higher priority than a tuner used for data services; and
receiving a tuner request for a picture in picture window, wherein a tuner request to use data services has higher priority than a tuner used for a picture in picture window.

3. A method as defined in claim 1, wherein determining if the request causes a tuner conflict further comprises determining if all tuners are being used by a consumer, wherein a tuner in an idle state is not being used by a consumer and can be allocated to the requesting consumer.

4. A method as defined in claim 1, wherein resolving the request for the tuner further comprises:
broadcasting a message to other consumers, wherein the broadcast message determines whether a consumer is using a particular tuner; and
allocating the particular tuner to the requesting consumer if no response to the message is received.

5. A method as defined in claim 1, wherein the requesting consumer is a user and a tuner is being used for a system deferrable event, interrupting the system deferrable event and allocating the tuner to the requesting consumer.

6. A method as defined in claim 5, wherein resolving the request for the tuner further comprises notifying consumers that their use of a tuner may end because of a scheduled event that has a higher priority than the current priority of the tuner.

7. In a system where consumers including one or more node set top boxes and a central server that distributes content from a source to the node set top boxes, wherein the central server includes one or more tuners that are used by the central server and the one or more node set top boxes, a method for allocating the one or more tuners to the consumers, the method comprising:
receiving a tuner request from a consumer, wherein the tuner request creates a tuner conflict such that there is not a tuner available to allocate to the requesting consumer;
resolving the tuner request by having the consumer select at least one of:
displaying a recorded program to the user, wherein a tuner is not required to display the recorded program and the tuner conflict is resolved; and
changing a scheduled event such that a particular tuner associated with the scheduled event that causes a conflict with the tuner request no longer conflicts with the tuner request; and allocating the particular tuner to the consumer.

8. A method as defined in claim 7, wherein receiving a tuner from a consumer further comprises at least one of:
receiving a tuner request to record a program or for a record buffer;
receiving a tuner request to watch a live program or for a pause buffer, wherein a tuner request to record a program has higher priority than a tuner used to watch a live program;
receiving a tuner request to use data services, wherein a tuner request to watch a live program has higher priority than a tuner used for data services; and
receiving a tuner request for a picture in picture window, wherein a tuner request to use data services has higher priority than a tuner used for a picture in picture window.

9. A method as defined in claim 7, wherein changing a scheduled event further comprises:
rescheduling a scheduled event such that the particular tuner used for the scheduled event no longer conflicts with the tuner request; and
canceling a scheduled event such that the particular tuner used for the scheduled event no longer conflicts with the tuner request.

10. A method as defined in claim 7, wherein resolving the tuner request further comprises:
broadcasting a message to other consumers to determine whether a consumer is using a particular tuner; and
allocating the particular tuner to the requesting consumer if no response to the message is received.

11. A method as defined in claim 8, wherein resolving the tuner request further comprises allocating a particular tuner to the requesting consumer if the particular tuner has a priority lower than a priority associated with the tuner request.

12. A method as defined in claim 7, wherein resolving the tuner request further comprises preventing the tuner conflict by lowering a priority of a tuner when a particular tuner usage terminates.

13. A method as defined in claim 12, wherein preventing the tuner conflict further comprises placing a particular tuner in an idle state when the tuner usage terminates.

14. A method as defined in claim 13, wherein the tuner usage is one of:
recording a program;
not receiving a response to a broadcast message; and
not receiving a user response when a set top box enters a screensaver mode.

15. In a network where consumers that include one or more set top boxes use tuners located at a central server, wherein the tuners are required to deliver content from a source to the consumers in the network, a computer program product for implementing a method for allocating a tuner to a consumer, the computer program product comprising:
a computer readable medium having computer executable instructions for performing the method, the method comprising:
receiving a tuner request at the central server from a consumer, wherein the tuner request is associated with a tuner priority;
determining if the tuner request causes a tuner conflict such that a tuner cannot be allocated to the requesting consumer, wherein the tuner request is granted if there is not a tuner conflict; and
resolving the request for the tuner by providing the consumer with a particular tuner that has a priority that is less than the tuner priority associated with the tuner request, wherein the particular tuner is not allocated to the consumer if the priority of the particular tuner is equal or greater than the tuner priority associated with the tuner request.

16. A computer program product as defined in claim 15, wherein receiving a tuner request at the central server further comprises at least one of:
receiving a tuner request to record a program or for a record buffer;
receiving a tuner request to watch a live program or for a pause buffer, wherein a tuner request to record a program has higher priority than a tuner used to watch a live program;
receiving a tuner request to use data services, wherein a tuner request to watch a live program has higher priority than a tuner used for data services; and
receiving a tuner request for a picture in picture window, wherein a tuner request to use data services has higher priority than a tuner used for a picture in picture window.

17. A computer program product as defined in claim 15, wherein determining if the request causes a tuner conflict further comprises determining if all tuners are being used by a consumer, wherein a tuner in an idle state is not being used by a consumer and can be allocated to the requesting consumer.

18. A computer program product as defined in claim 15, wherein resolving the request for the tuner further comprises:
broadcasting a message to other consumers, wherein the broadcast message determines whether a consumer is using a particular tuner; and
allocating the particular tuner to the requesting consumer if no response to the message is received.

19. A computer program product as defined in claim 15, wherein the requesting consumer is a user and a tuner is being used for a system deferrable event, interrupting the system deferrable event and allocating the tuner to the requesting consumer.

20. A computer program product as defined in claim 19, wherein resolving the request for the tuner further comprises notifying consumers that their use of a tuner may end because of a scheduled event that has a higher priority that the current priority of the tuner.

21. In a system where consumers including one or more node set top boxes and a central server that distributes content from a source to the node set top boxes, wherein the central server includes one or more tuners that are used by the central server and the one or more node set top boxes, a computer program product for implementing a method for allocating the one or more tuners to the consumers, the computer program product comprising:
a computer readable medium having computer executable instructions for performing the method, the method comprising:
receiving a tuner request from a consumer, wherein the tuner request creates a tuner conflict such that there is not a tuner available to allocate to the requesting consumer;
resolving the tuner request by having the consumer select at least one of:
displaying a recorded program to the user, wherein a tuner is not required to display the recorded program and the tuner conflict is resolved; and
changing a scheduled event such that a particular tuner associated with the scheduled event that causes a conflict with the tuner request no longer conflicts with the tuner request; and allocating the particular tuner to the consumer.

22. A computer program product as defined in claim 21, wherein receiving a tuner from a consumer further comprises at least one of:
receiving a tuner request to record a program or for a record buffer;
receiving a tuner request to watch a live program or for a pause buffer, wherein a tuner request to record a program has higher priority than a tuner used to watch a live program;
receiving a tuner request to use data services, wherein a tuner request to watch a live program has higher priority than a tuner used for data services; and
receiving a tuner request for a picture in picture window, wherein a tuner request to use data services has higher priority than a tuner used for a picture in picture window.

23. A computer program product as defined in claim 21, wherein changing a scheduled event further comprises:
rescheduling a scheduled event such that the particular tuner used for the scheduled event no longer conflicts with the tuner request; and
canceling a scheduled event such that the particular tuner used for the scheduled event no longer conflicts with the tuner request.

24. A computer program product as defined in claim 21, wherein resolving the tuner request further comprises:
broadcasting a message to other consumers to determine whether a consumer is using a particular tuner; and
allocating the particular tuner to the requesting consumer if no response to the message is received.

25. A computer program product as defined in claim 22, wherein resolving the tuner request further comprises allocating a particular tuner to the requesting consumer if the particular tuner has a priority lower than a priority associated with the tuner request.

26. A computer program product as defined in claim 21, wherein resolving the tuner request further comprises preventing the tuner conflict by lowering a priority of a tuner when a particular tuner usage terminates.

27. A computer program product as defined in claim 26, wherein preventing the tuner conflict further comprises placing a particular tuner in an idle state when the tuner usage terminates.

28. A computer program product as defined in claim 27, wherein the tuner usage is one of:
recording a program;
not receiving a response to a broadcast message; and
not receiving a user response when a set top box enters a screensaver mode.

29. In a network where consumers use tuners that are distributed within the network, wherein the tuners are required to deliver content from a source to the consumers in the network, a method for allocating a tuner to a consumer, the method comprising:
allocating tuners in the network to consumers according to rules that govern tuner usage within the network;
when a consumer makes a tuner request for a tuner from the tuners distributed in the network, determining if the tuner request causes a tuner conflict such that a tuner cannot be allocated to the requesting consumer, wherein the tuner request is granted if there is not a tuner conflict such that a tuner is allocated to the requesting consumer; and
resolving the tuner conflict by allocating a particular tuner to the consumer that has a priority that is less than a tuner priority associated with the tuner request, wherein the particular tuner is not allocated to the consumer if the priority of the particular tuner is equal or greater than the tuner priority associated with the tuner request.

30. A method as defined in claim 29, wherein determining if the tuner request causes a tuner conflict such that a tuner cannot be allocated to the requesting consumer further comprises at least one of:
determining if the tuner request is to record a program or for a record buffer;
determining if the tuner request is to watch a live program or for a pause buffer, wherein a tuner request to record a program has higher priority than a tuner used to watch a live program;
determining if the tuner request is to use data services, wherein a tuner request to watch a live program has higher priority than a tuner used for data services; and
determining if the tuner request is for a picture in picture window, wherein a tuner request to use data services has higher priority than a tuner used for a picture in picture window.

31. A method as defined in claim 29, determining if the tuner request causes a tuner conflict such that a tuner cannot be allocated to the requesting consumer further comprises determining if all tuners are being used by a consumer, wherein a tuner in an idle state is not being used by a consumer and can be allocated to the requesting consumer.

32. A method as defined in claim 29, wherein resolving the tuner conflict further comprises:
broadcasting a message to other consumers, wherein the broadcast message determines whether a consumer is using a particular tuner; and
allocating the particular tuner to the requesting consumer if no response to the broadcast message is received.

33. A method as defined in claim 29, wherein the requesting consumer is a user and a tuner is being used for a system deferrable event, interrupting the system deferrable event and allocating the tuner to the requesting consumer.

34. A method as defined in claim 33, wherein resolving the tuner conflict further comprises notifying consumers that their use of a tuner may end because of a scheduled event that has a higher priority than the current priority of the tuner.

35. A method as defined in claim 29, wherein each set top box in the network has a priority that determines which tuner is taken by default when no user responds to a broadcast message.

36. A method as defined in claim 29, wherein the rules comprise one or more of:
allocating a separate tuner for each live television event;
allocating a separate tuner for each record event;
allocating a separate tuner for each pause buffer such that consumers do not share a pause buffer;
allocating a separate tuner for each record buffer such that consumers do not share a record buffer;
allowing a consumer who initiates a record event to return to a record buffer for the record event;
preventing a record event from terminating if another consumer is viewing the record event as it records, wherein the record event can be terminated if only a single consumer is watching the record event while it is recording;
broadcasting a message to other consumers to determine if tuners are in use, wherein at least one tuner from the tuners allocated to consumers that do not respond to the message is taken for the requesting consumer;
taking a tuner according to tuner priorities; and
informing the requesting consumer that no tuner is available.

37. In a network where consumers use tuners that are distributed within the network, wherein a tuner is required to deliver content from a source to a consumer in the network, a method for allocating tuners according to tuner usage, the method comprising:
determining if a tuner request causes a tuner conflict such that a tuner cannot be allocated to a requesting consumer, wherein a tuner request is granted if there is not a tuner conflict according to rules administered by a rules engine, wherein the rules comprise:
assigning a separate tuner to each event;
assigning a separate tuner to each pause buffer; and
assigning a separate tuner to each record buffer; and
allocating tuners by a rules engine according to the rules if there is a conflict, wherein no consumer loses a tuner without receiving a broadcast and wherein the consumer that loses a tuner is determined according to tuner priorities.

38. A method as defined in claim 37, wherein a first consumer and a second consumer are viewing the same event using different set top boxes, wherein the rules further comprise assigning a first tuner to the first consumer for a pause buffer and assigning a second tuner to the second consumer for a separate pause buffer.

39. A method as defined in claim 37, wherein the rules further comprise allowing a consumer to use a tuner for recording a live television event and for viewing the live television event, wherein the consumer requires another tuner if the consumer desires to perform another function that requires a tuner.

40. A method as defined in claim 39, wherein the tuner is controlled by a scheduler when the tuner is used for recording an event.

41. A method as defined in claim 37, wherein a recording event cannot be interrupted by another consumer.

42. A method as defined in claim 37, further comprising broadcasting a message in an attempt to acquire a tuner for a requesting consumer.

43. A method as defined in claim 37, further comprising taking a tuner for a requesting consumer according to tuner priorities such that a tuner with the lowest priority is reallocated to the requesting consumer.
